# EUROPEAN PATENT SPECIFICATION

(11) **EP 2 594 615 B1**
(45) Date of publication and mention of the grant of the patent: **06.10.2021**
(21) Application number: 12192644.8
(22) Date of filing: 14.11.2012
(51) Int. Cl.: C09K 3/14, E04F 15/02

(54) **Non-slip floor coating composition**
Rutschfeste Fussbodenbelagzusammensetzung
Composition de revêtement de sol anti-dérapant

(30) Priority: 17.11.2011 GB 201119858
(43) Date of publication of application: 22.05.2013
(73) Proprietor: Altro Limited, Letchworth Garden City Hertfordshire SG6 1NW (GB)
(72) Inventor: Peace, Richard, Letchworth Garden City, Hertfordshire SG6 1NW (GB); Masters, Karen, Letchworth Garden City, Hertfordshire SG6 1NW (GB)
(74) Representative: Peel, James Peter

(56) References cited:
- WO-A1-98/00241
- WO-A2-2008/029105
- JP-A- 2004 156 269
- JP-A- 2008 255 251
- US-A- 5 541 239
- US-A- 5 759 630
- US-A1- 2003 056 696
- US-A1- 2009 022 979

## Description

The present invention provides a coating composition for providing a non-slip surface suitable for use in a wet environment where users may be bare foot or shod, a flooring material having such a surface and a method for providing a flooring material with such a surface.

In some areas flooring is required to be slip resistant with both shod and barefoot traffic. Examples include changing rooms, assisted shower-rooms, care homes etc. While there are products that work well with shod traffic, and those which work well with bare feet and soft-soled shoes, there are few products which work well with both. Those that do tend to be very rough, difficult to maintain and/or aesthetically unpleasing.

WO2008/029105 discloses a slip-resistant plastics floor covering having a first layer of plastics material which first layer of plastics material has on its upper surface a particulate layer of one or more transparent coated inorganic particles which particulate layer imparts slip- resistance to the floor covering which has an improved appearance; and a method for preparing a slip-resistant plastics floor covering.

US2009/0022979 discloses a composition including an acrylic residue, an inorganic additive including particles that range in size from 20 to 600 microns, and cement powder.

WO98/00241 discloses a preparation for applying an anti-slip layer to a surface. The preparation comprises a coating composition, containing particulate material, and a curing agent, the particulate material consisting of synthetic granules. The invention also relates to a method for preparing the preparation and to a method for applying an anti-slip layer using the preparation, a product which is provided with an anti-slip layer and the use of a preparation comprising synthetic granules for applying an anti-slip layer to a surface.

US5759630 discloses a process for the production of textured coatings on plastics surfaces using coating compositions based on hydroxyl group-containing binders and polyisocyanates, and using pulverulent texturing agents.

JP2004156269 discloses a floor member for a bathroom unit, which is manufactured by applying a hydrophilic paint on the surface. In this regard, a hydrophilic paint layer is formed on the surface of a base member so that the contact angle of the surface of the floor member with water is 40-70 degrees.

JP2008255251 discloses a coating film having dust-proof properties and anti-slip properties. This can be formed from a coating composition prepared by compounding a main component (a) for an epoxy resin, a curing agent (b), and a resin powder (c) which contains at least one of a polypropylene powder, a polyethylene powder, a polyester powder, a polyvinyl chloride powder, and a cross-linked acrylic powder, wherein 80% of the particles have a maximum length of 20-300 µm and the ratio of maximum length to minimum length in an optional cross-sectional configuration of powder particle is 17 or lower.

US 2003056696 discloses a polymer-cement composite having strength, flexibility and durability. The composite comprises, by weight percent, about 40 to 50% inert, inorganic filler material; about 12 to 23% latex; about 20 to 25% cement; about 7 to 13% reactive silica and about 0.2 to 1% diatomite.

There is therefore a need for a flooring product which works well with all shoes types as well as with bare feet, is easy to maintain and can be manufactured in a range of attractive finishes.

According to the invention there is provided a curable particulate coating according to claim 1.

It has surprisingly been found that a flooring material having a coating containing particles with a size range of from 60 to 120 µm, wherein said particles are present in an amount of from 30% by weight of the coating, provides a non-slip surface suitable for all types of footwear as well as bare feet. The flooring material has uniform, consistent non-slip properties and is easy to maintain.

According to the invention there is also provided a flooring material according to claim 6.

According to the invention there is further provided a method according to claim 10.

In the present claimed invention it is required that there are particles present having a size range from 60 to 120 µm, as measured using laser diffraction, said particles being present in an amount of from 30% by weight of the coating. In some embodiments, the particle size may be from 65, for example from 70, for example from 75, for example from 76 to 115, for example to 110, for example to 106 µm. In some embodiments, the coating composition may only include particles which have a size of from 60, for example from 65, for example from 70, for example from 75, for example from 76 to 120, for example to 115, for example to 110, for example to 106 µm. This is because when the coating composition includes particles having a size of less than 60 µm, it has been found that the viscosity of the coating composition is increased which makes it harder to apply without the non-slip properties of the coating being measurably improved and the properties of the coating on the flooring material are not uniform. When the coating composition includes particles having a size of more than 120 µm, the roughness of the surface of the flooring material is improved at the expense of the cleanability as the larger sized particles are more liable to pick up dirt, and the particles are less suited for application to the flooring material by transfer roller. Particles having a suitable size for inclusion in the composition according to the invention may be prepared by any known separation technique, such as sieving. The particle size of a particle used in the invention may be measured using laser diffraction.

In some embodiments, the particles are present in the coating in an amount sufficient for the surface of the flooring material to feel rough to a bare foot without the amount being so much that the surface feels uncomfortable. A skilled person would be able to determine a suitable amount of the particles to be included in the coating. For example, a suitable amount of particles is from 50, for example from 55 to 100, for example to 95 parts by weight per 100 parts by weight of the curable polymer. An amount of particles of less than 50 parts by weight per 100 parts by weight of the curable polymer provides a surface which is too smooth to be non-slip for a bare foot. An amount of particles of more than 100 parts by weight per 100 parts by weight of the curable polymer provides a surface which is too rough to be comfortable for a bare foot and the coating is too viscous to be applied uniformly to a flooring material. In a further embodiment, a suitable amount of particles is a weight percentage of from 35% to 49% based on the total weight of the coating.

The coating composition is applied at a coverage amount of from 10 to 40 grams per square meter of flooring material. In some embodiments, the coating composition is applied at a coverage amount of from 15, for example from 18 to 30, for example to 22 grams per square metre of flooring material. For example, the coverage amount may be 20 grams per square metre of flooring material. A coverage amount of less than 10 grams per square metre was found to provide a coating which lack consistency of properties. A coverage amount of greater than 40 grams per square metre was found to provide a coating which was insufficiently flexible and which was expensive to apply. In some embodiments, the coating may have a thickness of from 5, for example from 9 to 50 µm, for example to 40, for example to 30, for example to 20 µm.

To obtain a composition according to the invention which is optimised for cost of application, ease of applicability, and uniformity of properties such as non-slip and ease of maintenance, a combination of factors need to be balanced. These factors include the particle size, the amount of particles and the amount of coating applied per square metre of flooring material. For example, it will be appreciated that if the particles have a broad particle size range such that percentage of the particles having the defined particle size range is less than 80% by weight (for example less than 85% by weight, e.g. less than 90% by weight) of the total weight of particles, a greater amount of particles will be required to have an equivalent non-slip effect. This will make the coating composition more difficult to apply. Also, the particles having a size less than 60 µm or greater than 120 µm will give rise to the problems discussed above.

In some embodiments, the coating composition may be a liquid coating composition or a powder coating composition. Where the coating composition is a liquid composition, the composition may optionally be a water-based composition. A suitable water-based composition is a composition which is thermally curable (e.g. water-based polyurethane) or curable by thermal and UV radiation (e.g. water-based UV curable polyurethane). Alternatively, the coating composition may be a UV curable liquid composition (e.g. a polyacrylate or urethane acrylate). Where the coating composition is a powder composition, the composition may be a PVDF based composition.

In some embodiments, the particles may be smooth particles. A smooth particle is a particle which has no angular protrusion or indentation, for example a particle which has no protrusion or indentation having an outward facing angle of 90° or less. In some embodiments, the particles may be one or more of a smooth sphere, bead and grain. The advantage of using a smooth particle in the composition or flooring material according to the invention is that the cured coating is easier to clean as the coating lacks any angular surface in which a cleaning material (for example the fibres of a mop) may be caught.

In some embodiments, the particles used in the composition or flooring material according to the invention may be one or more of the following types of particle: a glass particle, a polymeric particle (for example Nylon (Trademark)), a ceramic particle (e.g. porcelain) and an aluminium oxide particle.

In some embodiments, the coating may include one or more layers. Where the coating has two or more layers such that the coating has an upper coating layer providing the non slip surface and one or more lower coating layers, at least the upper coating layer contains particles.

In some embodiments, the flooring material used in the invention comprises one or more base layers comprising a polymeric material. Examples of suitable polymeric material include plasticised PVC, rubber, linoleum, plasticised acrylic, and/or a polyolefin. Optionally, the one or more base layers may contain one or more types of slip resistant and/or wear resistant particles such as aluminium oxide, silicon carbide, quartz or glass. Optionally, the one or more base layers may include one or more types of decorative elements such as a coloured chip, fleck and/or flake for example of a coloured polymeric material and/or a printed design layer. The flooring material may optionally be embossed.

In some embodiments, the method of the invention may include the following steps before steps (a) and (b):
(i) providing a substrate;
(ii) applying a base layer comprising a polymeric material to the substrate;
(iii) curing the base layer to provide a floor covering;
wherein optionally the base layer contains one or more types of slip resistant, wear resistant and/or decorative particles. The method of the invention optionally includes a final step of removing the flooring material from the substrate where the substrate does not form part of the flooring material and is only used to support the flooring material during its manufacture.

The invention will now be described with reference to the following Figures of the accompanying drawings which are not intended to limit the scope of the invention in which:
**Figure 1** shows a schematic cross-section of a first embodiment of a flooring material according to the invention;
**Figure 2** shows a schematic cross-section of a second embodiment of a flooring material according to the invention;
**Figure 3** shows a schematic cross-section of a machine according to the invention applying a coating composition according to the invention to a pre-laid flooring material to prepare a third embodiment of a flooring material according to the invention; and
**Figure 4** shows a schematic diagram of a production line for preparing a fourth embodiment of a flooring material according to the invention.

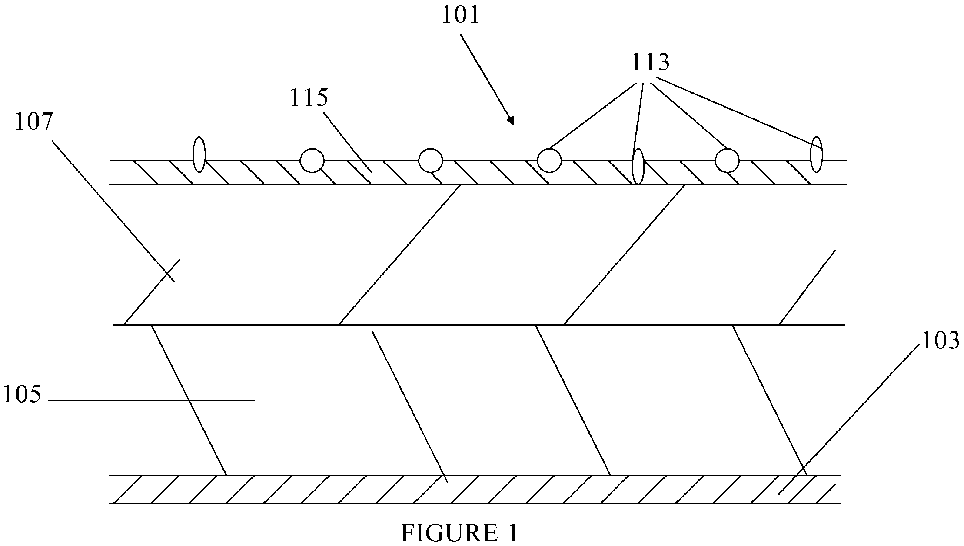

The first embodiment of a flooring material 101 illustrated in Figure 1 includes a substrate 103 which is a cellulose/polyester support reinforced with a 32 tex glass crennette. The substrate 103 is approximately 0.15mm in thickness. On top of the substrate 103 there is a PVC plastisol undercoat 5 which is approximately 1mm thick. On top of the undercoat 105 there is a layer 107 of PVC plastisol which is about 0.8mm thick. On top of layer 107, there is a coating 115 which contains particles 113 which provide a non-slip surface for all shoe types and for bare feet too.

As an alternative to the embodiment depicted in Figure 1, the undercoat 5 and layer 7 may be provided as a single layer, glass beads and/or coloured PVC chips may be provided in layer 7, and/or further particulate material may be included such as aluminium oxide grits. As further alternative to the embodiment depicted in Figure 1, the flooring material 101 may omit a substrate.

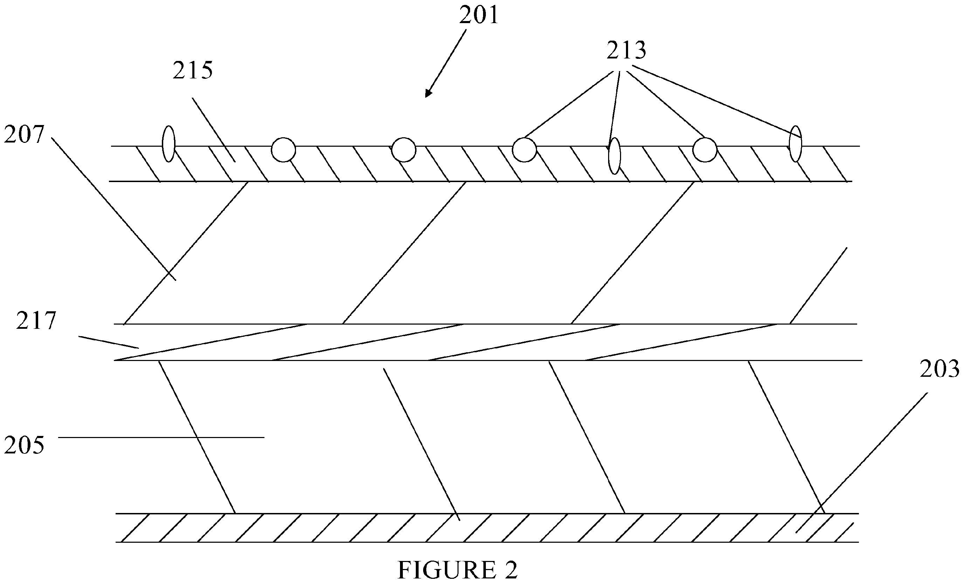

The second embodiment of a flooring material 201 illustrated in Figure 2 includes a substrate 203, a PVC plastisol undercoat 205. On top of the undercoat layer 205, there is a design layer 217 which comprises a layer of water-based ink applied by gravure printing. On top of the design layer is a layer 207 of PVC plastisol. On top of the PVC plastisol layer 207, there is a coating 215. Embedded in and proud of the coating 215 are particles 213.

As an alternative to the embodiment depicted in Figure 2, the undercoat 205 and layer 207 may be provided as a single layer, glass beads and/or coloured PVC chips may be provided in layer 207 and/or further particulate material may be included such as aluminium oxide grits.

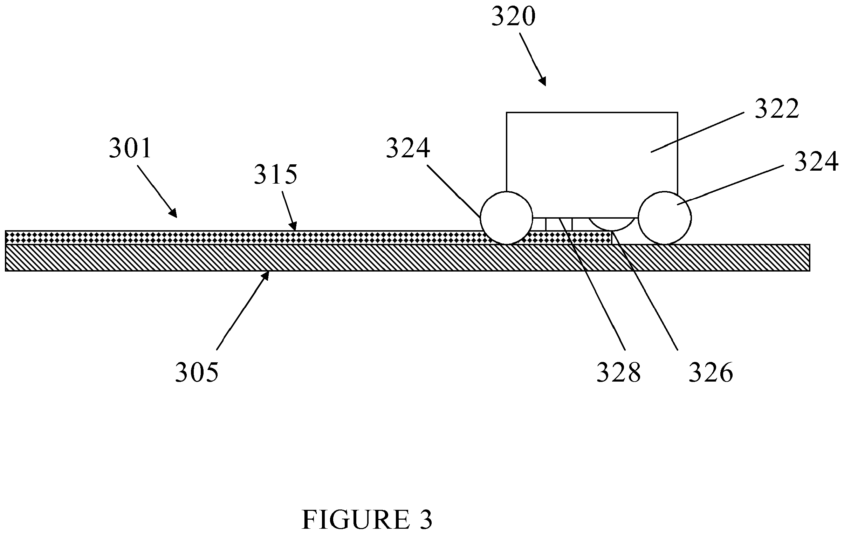

A machine 320 according to the invention is illustrated in Figure 3. The machine 320 is shown preparing a third embodiment of a flooring material 301 according to the invention by applying a coating composition 315 to a pre-laid floor covering 305. The machine 320 has a housing 322 and two pairs of optionally powered wheels 324. Housing 322 has a reservoir of the composition according to the invention (not shown), an application roller 326 for applying the composition to the flooring material, a transfer roller (not shown) for transferring the composition from the reservoir to the application roller and a radiation generator 328 for curing the composition. The radiation generator 328 may be a heater for generating thermal radiation for curing a thermally curable coating composition or may be a UV radiation generator for curing a UV curable coating composition or the radiation generator 328 may include both a heater and a UV radiation generator for curing a coating composition requiring thermal and UV radiation for curing. The wheels 324 are optionally operatively connectable to the application roller 326, transfer roller (not shown) and the radiation generator 328. Therefore, when the machine 320 is placed on a pre-laid floor covering 305 in an operative mode, movement of the wheels 324 causes movement of the transfer roller (not shown) and application roller (326) such that coating 315 is applied to floor covering 305. The radiation generator 328 is then operated to cure coating 315 to obtain flooring material 301 according to the invention.

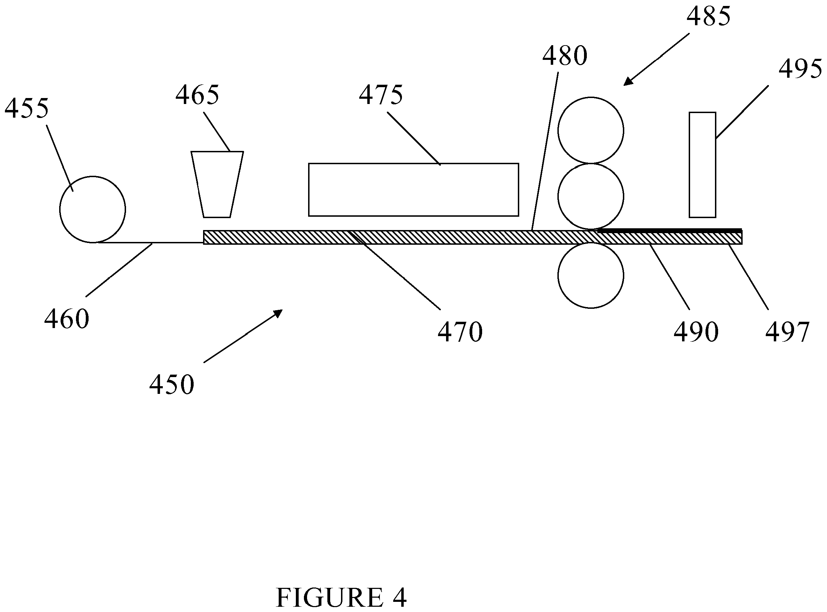

A production line 450 is schematically illustrated in Figure 4. The production line 450 has a roll 455 of substrate 460, a polymeric material hopper 465, an oven 475, rollers 485 for applying the coating composition according to the invention and radiation generator 495. To operate the production line, substrate 460 is unrolled from roll 455 and fed under hopper 465 which applies a layer of polymeric material to the substrate to form a coated substrate 470. Substrate 460 is optionally precoated with one or more base layers of polymeric material and/or a design layer. Coated substrate 470 is cured in oven 475 and is optionally embossed to form a floor covering 480. A coating composition is applied to the cured floor covering 480 by rollers 485 to form a coated floor covering 490. The coating is cured by radiation generator 495 to form a fourth embodiment of a flooring material 497 according to the invention.

The invention is further illustrated with reference to the following examples which are not intended to limit the scope of the invention claimed.

### PREPARATIVE EXAMPLE 1

Plastisols having the formulations given in Table 1 were produced as described below.

**TABLE 1**

| Plastisol Formulations | | |
|---|---|---|
| | A. Weight/kg | B. Weight/kg |
| PVC polymer | 15 | 20 |
| PVC polymer | 5 | - |
| Di-isodecyl phthalate | 6.5 | 6.5 |
| Calcium magnesium carbonate | - | 5 |
| Blend of aliphatic hydrocarbons with a neutral wetting and dispersing component | - | 0.4 |
| Liquid barium zinc preparation containing organic barium compounds | 0.3 | 0.4 |
| A solution of 10,10' oxybisphenoxyarsine in epoxidised soya bean oil | - | 0.2 |
| Black pigment provided as a dispersion of carbon black in a plasticiser | - | 0.02 |

In each case, the ingredients were weighed in to a 50 litre steel vessel and mixed by a trifoil shaft mixer at 100 rpm for 4 minutes and a dissolver shaft at 1800 rpm for 2 minutes. Aluminium oxide particles (from Washington Mills) size F40 (FEPA Standard 42-GB-1984 measurement) were weighed into plastisol B (10% w/w) and mixed.

### PREPARATIVE EXAMPLE 2

Coating compositions according to the invention was prepared as follows.

Glass spheres having a particle size of from about 75 to about 106 µm were obtained by sieving.

A UV curable mixture containing from 20 to 30 parts by weight of oxybis(methyl-2,1-ethanediyl) diacrylate, from 10 to less than 20 parts by weight of 2-phenoxyethyl acrylate, from 10 to less than 20 parts by weight of acrylate resin, from 2.5 to 5 parts by weight of (1-methyl-1,2-ethanediyl)bis[oxy(methyl-2,1-ethanediyl)] diacrylate, from 1 to 5 parts by weight of benzophenone and from 1 to 5 parts by weight of 1-6,hexanedioldiacrylate was prepared. The glass spheres were added to the UV curable mixture at a rate of 60 parts by weight of the glass spheres to 100 parts by weight of the UV curable mixture to obtain coating composition C. Coating composition D was prepared by adding 80 parts by weight of the glass spheres to 100 parts by weight of the UV curable mixture.

### EXAMPLES 3 AND 4

In these Examples, the preparation of a flooring material as depicted in Figure 1 is described. The method of this Example is illustrated in Figure 4.

Plastisol B was spread coated onto a substrate to a thickness of 1mm by knife over roller. The substrate was a 2 m width cellulose/polyester support reinforced with a glass crennette moving at a rate of 7 metres/minute. The system was then passed into a convection oven where it was exposed to 160°C for 2 minutes. The system was then passed through a series of cooling rollers before it was over coated with plastisol A to a total thickness of 2mm by knife over bed.

The system was then passed in to a convection oven where it was exposed to 190°C for 3 minutes before being embossed and cooled. In Example 3, coating composition C was applied by roller to the cured system at coverage rate of 20 grams per square metre. In Example 4, coating composition D was applied by roller to the cured system at coverage rate of 20 grams per square metre. The coated systems were cured using UV radiation to produce flooring materials according to the first embodiment of the invention.

Comparative visual tests showed that the appearance of the floor covering prepared was not impaired by the addition of the anti-slip material. The product of Example 3 showed good slip resistance with all shoes types and bare-feet, achieving a rating of R10 shod (DIN51130) and Class B bare-foot (DIN51097) with a pendulum test value of 50-60 using slider 96 (BS7976). The product of Example 4 achieved R11 shod, Class C bare foot and a pendulum test result of 65. The products of Examples 3 and 4 were not excessively rough to the touch, have improved stain resistance over standard PVC products and in corridor trials were not been found to retain any more dirt than a typical R10 product with a PU finish.

### EXAMPLES 5 AND 6

In these Examples, the preparation of flooring materials as depicted in Figure 2 is described.

Plastisol B was spread coated onto a substrate to a thickness of 1mm by knife over roller. The substrate was a 2 m width cellulose/polyester support reinforced with a glass crennette moving at a rate of 7 metres/minute. The system was then passed over a gel drum to partially cure and flatten the layer of plastisol.

A wood print PVC film having a thickness of 0.1mm was then laminated onto the system by the application of pressure to the hot surface of the gelled PVC.

Plastisol A was spread coated on the system to a thickness of 2mm by knife over roller. The system was then passed in to a convection oven where it was exposed to 190°C for 2 minutes before being embossed. In Example 5, coating composition C was applied by roller to the cured system at coverage rate of 20 grams per square metre. In Example 6, coating composition D was applied by roller to the cured system at coverage rate of 20 grams per square metre. The coated systems were cured using UV radiation to produce flooring materials according to the second embodiment of the invention.

Comparative visual tests showed that the appearance of the floor covering prepared was not impaired by the addition of the anti-slip material. The product of Example 5 showed good slip resistance with all shoes types and bare-feet, achieving a rating of R10 shod (DIN51130) and Class B bare-foot (DIN51097) with a pendulum test value of 50-60 using slider 96 (BS7976). The product of Example 6 achieved R11 shod, Class C bare foot, and a pendulum test result of 65. The products were not excessively rough to the touch, have improved stain resistance over standard PVC products and in corridor trials were not been found to retain any more dirt than a typical R10 product with a PU finish.

### EXAMPLE 7

In this Example, the preparation of a flooring material as depicted in Figure 3 is described.

Coating composition C was applied by roller to a pre-laid floor covering at coverage rate of 20 grams per square metre using the machine according to the invention. The coated floor covering was cured using UV radiation to produce a flooring material according to the third embodiment of the invention.

Comparative visual tests showed that the appearance of the floor covering prepared was not impaired by the addition of the anti-slip material. The product showed good slip resistance with all shoes types and bare-feet, achieving a rating of R10 shod (DIN51130) and Class B bare-foot (DIN51097) with a pendulum test value of 50-60 using slider 96 (BS7976).

## Claims

1. A curable particulate coating composition for providing a non-slip surface suitable for use in a wet environment where users may be bare foot or shod wherein the composition comprises: a) a curable polymer and b) particles having a size range from 60 to 120 µm, as measured using laser diffraction, said particles being present in an amount of from 30% by weight of the coating; wherein the percentage of particles having the defined particle size range of from 60 to 120 µm is 80% or more by weight of the total weight of particles; and wherein the particles include one or more of the following types of particle: a glass particle, a polymeric particle, a ceramic particle, and an aluminium oxide particle.

2. A composition as defined in claim 1 wherein the particle size is from 65 to 115 µm, as measured using laser diffraction.

3. A composition as defined in claim 1 or claim 2 wherein the composition only includes particles which have a size of from 60 to 120µm, as measured using laser diffraction.

4. A composition as defined in any one of the preceding claims which comprises from 50 to 100 parts by weight of particles per 100 parts by weight of the curable polymer.

5. A composition as defined in any one of the preceding claims wherein the composition is a liquid coating composition or a powder coating composition.

6. A flooring material having a cured polymer coating which provides a non-slip surface suitable for use in a wet environment where users may be bare foot or shod, which coating comprises particles having a size range from 60 to 120 µm, as measured using laser diffraction, said particles being present in an amount of from 30% by weight of the coating; wherein the percentage of particles having the defined particle size range of from 60 to 120 µm is 80% or more by weight of the total weight of particles; wherein the coating is applied at a coverage amount of from 10 to 40 grams per square metre of flooring material; and wherein the particles include one or more of the following types of particle: a glass particle, a polymeric particle, a ceramic particle, and an aluminium oxide particle.

7. A flooring material as defined in claim 6 wherein the coating has a thickness of from 5 to 50µm.

8. A flooring material as defined in claim 6 or claim 7 wherein the coating has one or more layers.

9. A flooring material as defined in any one of claims 6 to 8 wherein the flooring material comprises a base layer of polymeric material; preferably the flooring material comprises a base layer of cured polymeric material and a substrate; preferably the flooring material comprises a layer of plasticised PVC material and a substrate.

10. A method for preparing a flooring material, which method comprises the steps of:
a. applying a composition which provides a non-slip surface suitable for use in a wet environment where users may be bare foot or shod to a floor covering; and
b. curing the coating;
wherein the composition comprises a) a curable polymer and b) particles having a size range from 60 to 120 µm, as measured using laser diffraction, said particles being present in an amount of from 30% by weight of the coating; wherein the percentage of particles having the defined particle size range of from 60 to 120 µm is 80% or more by weight of the total weight of particles; wherein the coating is applied at a coverage amount of from 10 to 40 grams per square metre of flooring material; and wherein the particles include one or more of the following types of particle: a glass particle, a polymeric particle, a ceramic particle, and an aluminium oxide particle.

11. A method as defined in claim 10 wherein the composition is as defined in any one of claims 2 to 5.

12. A method as defined in claim 10 or claim 11 wherein steps (a) and (b) follow the following steps for preparing the floor covering:
(i) providing a substrate;
(ii) applying a base layer comprising a polymeric material to the substrate;
(iii) curing the base layer to provide a floor covering.

## Patentansprüche

1. Härtbare partikelförmige Beschichtungszusammensetzung zur Bereitstellung einer rutschfesten Oberfläche, die zur Verwendung in einer nassen Umgebung geeignet ist, in der Benutzer barfuß oder beschuht sein können, wobei die Zusammensetzung Folgendes umfasst: a) ein härtbares Polymer und b) Partikel mit einem Größenbereich von 60 bis 120 µm, wie unter Verwendung von Laserbeugung gemessen, wobei die Partikel in einer Menge von 30 Gew.-% der Beschichtung vorhanden sind; wobei der Prozentsatz an Partikeln mit dem definierten Partikelgrößenbereich von 60 bis 120 µm 80 Gew.-% oder mehr des Gesamtgewichts der Partikel beträgt; und wobei die Partikel einen oder mehrere der folgenden Partikeltypen beinhalten: ein Glaspartikel, ein Polymerpartikel, ein Keramikpartikel und ein Aluminiumoxidpartikel.

2. Zusammensetzung nach Anspruch 1, wobei die Partikelgröße von 65 bis 115 µm beträgt, wie unter Verwendung von Laserbeugung gemessen.

3. Zusammensetzung nach Anspruch 1 oder Anspruch 2, wobei die Zusammensetzung nur Partikel beinhaltet, die eine Größe von 60 bis 120 µm aufweisen, wie unter Verwendung von Laserbeugung gemessen.

4. Zusammensetzung nach einem der vorhergehenden Ansprüche, die von 50 bis 100 Gewichtsteile Partikel pro 100 Gewichtsteile des härtbaren Polymers umfasst.

5. Zusammensetzung nach einem der vorhergehenden Ansprüche, wobei die Zusammensetzung eine flüssige Beschichtungszusammensetzung oder eine Pulverbeschichtungszusammensetzung ist.

6. Bodenbelagsmaterial mit einer gehärteten Polymerbeschichtung, die eine rutschfeste Oberfläche bereitstellt, die zur Verwendung in einer nassen Umgebung geeignet ist, in der Benutzer barfuß oder beschuht sein können, wobei die Beschichtung Partikel mit einem Größenbereich von 60 bis 120 µm umfasst, wie unter Verwendung von Laserbeugung gemessen, wobei die Partikel in einer Menge von 30 Gew.-% der Beschichtung vorhanden sind; wobei der Prozentsatz an Partikeln mit dem definierten Partikelgrößenbereich von 60 bis 120 µm 80 Gew.-% oder mehr des Gesamtgewichts der Partikel beträgt; wobei die Beschichtung in einer Bedeckungsmenge von 10 bis 40 Gramm pro Quadratmeter Bodenbelagsmaterial aufgetragen wird; und wobei die Partikel einen oder mehrere der folgenden Partikeltypen beinhalten: ein Glaspartikel, ein Polymerpartikel, ein Keramikpartikel und ein Aluminiumoxidpartikel.

7. Bodenbelagsmaterial nach Anspruch 6, wobei die Beschichtung eine Dicke von 5 bis 50 µm aufweist.

8. Bodenbelagsmaterial nach Anspruch 6 oder Anspruch 7, wobei die Beschichtung eine oder mehrere Schichten aufweist.

9. Bodenbelagsmaterial nach einem der Ansprüche 6 bis 8, wobei das Bodenbelagsmaterial eine Basisschicht aus Polymermaterial umfasst; das Bodenbelagsmaterial bevorzugt eine Basisschicht aus gehärtetem Polymermaterial und einem Substrat umfasst; das Bodenbelagsmaterial bevorzugt eine Schicht aus Weich-PVC-Material und einem Substrat umfasst.

10. Verfahren zur Herstellung eines Bodenbelagsmaterials, wobei das Verfahren die folgenden Schritte umfasst:
a. Auftragen einer Zusammensetzung, die eine rutschfeste Oberfläche bereitstellt, die zur Verwendung in einer nassen Umgebung geeignet ist, in der Benutzer barfuß oder beschuht sein können, auf einen Bodenbelag; und
b. Härten der Beschichtung;
wobei die Zusammensetzung a) ein härtbares Polymer und b) Partikel mit einem Größenbereich von 60 bis 120 µm umfasst, wie unter Verwendung von Laserbeugung gemessen, wobei die Partikel in einer Menge von 30 Gew.-% der Beschichtung vorhanden sind; wobei der Prozentsatz an Partikeln mit dem definierten Partikelgrößenbereich von 60 bis 120 µm 80 Gew.-% oder mehr des Gesamtgewichts der Partikel beträgt; wobei die Beschichtung in einer Bedeckungsmenge von 10 bis 40 Gramm pro Quadratmeter Bodenbelagsmaterial aufgetragen wird; und wobei die Partikel einen oder mehrere der folgenden Partikeltypen beinhalten: ein Glaspartikel, ein Polymerpartikel, ein Keramikpartikel und ein Aluminiumoxidpartikel.

11. Verfahren nach Anspruch 10, wobei die Zusammensetzung wie in einem der Ansprüche 2 bis 5 definiert ist.

12. Verfahren nach Anspruch 10 oder Anspruch 11, wobei die Schritte (a) und (b) den folgenden Schritten zur Herstellung des Bodenbelags folgen:
(i) Bereitstellen eines Substrats;
(ii) Auftragen einer Basisschicht, die ein Polymermaterial umfasst, auf das Substrat;
(iii) Härten der Basisschicht, um einen Bodenbelag bereitzustellen.

## Revendications

1. Composition pour enduit particulaire durcissable, pour procurer une surface antidérapante convenant à l'utilisation dans un milieu mouillé où les utilisateurs peuvent être pieds nus ou chaussés, la composition comprenant : a) un polymère durcissable et b) des particules ayant une gamme de taille de 60 à 120 µm, mesurée par diffraction laser, lesdites particules étant présentes à raison d'au moins 30 % en poids de l'enduit ; où le pourcentage de particules ayant la gamme de taille de particules définie de 60 à 120 µm est de 80 % ou plus en poids du poids total des particules ; et où les particules comprennent un ou plusieurs des types de particule suivants : une particule de verre, une particule polymérique, une particule de céramique et une particule d'oxyde d'aluminium.

2. Composition telle que définie dans la revendication 1, dans laquelle la taille de particule est de 65 à 115 µm, mesurée par diffraction laser.

3. Composition telle que définie dans la revendication 1 ou la revendication 2, la composition ne comprenant que les particules qui ont une taille de 60 à 120 µm, mesurée par diffraction laser.

4. Composition telle que définie dans l'une quelconque des revendications précédentes, qui comprend de 50 à 100 parties en poids de particules pour 100 parties en poids du polymère durcissable.

5. Composition telle que définie dans l'une quelconque des revendications précédentes, la composition étant une composition pour enduit liquide ou une composition pour enduit en poudre.

6. Matériau pour revêtement de sol ayant un enduit polymère durci qui procure une surface antidérapante convenant à l'utilisation dans un milieu mouillé où les utilisateurs peuvent être pieds nus ou chaussés, ledit enduit comprenant des particules ayant une gamme de taille de 60 à 120 µm, mesurée par diffraction laser, lesdites particules étant présentes à raison d'au moins 30 % en poids de l'enduit ; où le pourcentage de particules ayant la gamme de taille de particules définie de 60 à 120 µm est de 80 % ou plus en poids du poids total des particules ; où l'enduit est appliqué à raison de 10 à 40 grammes de revêtement par mètre carré de matériau pour revêtement de sol ; et où les particules comprennent un ou plusieurs des types de particule suivants : une particule de verre, une particule polymérique, une particule de céramique et une particule d'oxyde d'aluminium.

7. Matériau pour revêtement de sol tel que défini dans la revendication 6, où l'enduit a une épaisseur de 5 à 50 µm.

8. Matériau pour revêtement de sol tel que défini dans la revendication 6 ou la revendication 7, où l'enduit a une ou plusieurs couches.

9. Matériau pour revêtement de sol tel que défini dans l'une quelconque des revendications 6 à 8, le matériau pour revêtement de sol comprenant une couche de base de matériau polymérique ; le matériau pour revêtement de sol comprenant de préférence une couche de base de matériau polymérique durci et un substrat ; le matériau pour revêtement de sol comprenant de préférence une couche de PVC plastifié et un substrat.

10. Procédé pour la préparation d'un matériau pour revêtement de sol, ledit procédé comprenant les étapes suivantes :
a. application à un revêtement de sol d'une composition qui procure une surface antidérapante convenant à l'utilisation dans un milieu mouillé où les utilisateurs peuvent être pieds nus ou chaussés ; et
b. durcissement de l'enduit,
où la composition comprend a) un polymère durcissable et b) des particules ayant une gamme de taille de 60 à 120 µm, mesurée par diffraction laser, lesdites particules étant présentes à raison d'au moins 30 % en poids de l'enduit ; où le pourcentage de particules ayant la gamme de taille des particules définie de 60 à 120 µm est de 80 % ou plus en poids du poids total des particules ; où l'enduit est appliqué à raison de 10 à 40 grammes de revêtement par mètre carré de matériau pour revêtement de sol ; et où les particules comprennent un ou plusieurs des types de particule suivants : une particule de verre, une particule polymérique, une particule de céramique et une particule d'oxyde d'aluminium.

11. Procédé tel que défini dans la revendication 10, dans lequel la composition est telle que définie dans l'une quelconque des revendications 2 à 5.

12. Procédé tel que défini dans la revendication 10 ou la revendication 11, dans lequel les étapes (a) et (b) suivent les étapes ci-dessous pour la préparation du revêtement de sol :
(i) fourniture d'un substrat ;
(ii) application au substrat d'une couche de base comprenant un matériau polymérique ;
(iii) durcissement de la couche de base pour fournir un revêtement de sol.
